# EUROPÄISCHE PATENTANMELDUNG

(11) **EP 2 698 051 A1**
(43) Veröffentlichungstag der Anmeldung: **19.02.2014**
(21) Anmeldenummer: 13401078.4
(22) Anmeldetag: 01.08.2013
(51) Int. Cl.: A01C 17/00

(54) **Schleuderstreuer**

(30) Priorität: 14.08.2012 DE 102012107429
(71) Anmelder: Amazonen-Werke H. Dreyer GmbH & Co. KG, 49205 Hasbergen (DE)
(72) Erfinder: Wessels, Thomas, 49080 Osnabrück (DE)

(57) **Zusammenfassung**

Schleuderstreuer mit Vorratsbehälter (2), unter dem zumindest eine um eine aufrechte Achse mittels zumindest einer Antriebswelle rotierend antreibbare Schleuderscheibe (6) angeordnet ist, wobei auf der Schleuderscheibe (6) zumindest eine Wurfschaufel (7, 8) angeordnet ist. Um die Enden der Wurfschaufeln (7, 8) besser sichtbar zu machen, ist vorgesehen, dass im Bereich des Außenumfangs der Scheuderscheibe (6) und/der im Bereich des äußeren Endes (19) zumindest einer Wurfschaufel (7, 8) ein Lichtauslasselement und/oder ein Leuchtmittel (20), welches über zumindest über einen Teilrotationsbereich der Schleuderscheibe (6) Licht als Warnmittel aussendet, angeordnet ist.

## Beschreibung

Die Erfindung betrifft einen Schleuderstreuer gemäß des Oberbegriffes des Patentanspruches 1.

Ein derartiger Schleuderstreuer ist in der DE 10 2009 44 743 A1 beschrieben. Derartige Schleuderstreuer weisen mit Wurfschaufeln besetzte rotierend angetriebene Schleuderscheiben auf. Mittels der rotierenden Wurfschaufeln werden die der Schleuderscheibe zugeführten Düngemittel in Breitverteilung auf der Bodenoberfläche verteilt. Damit eine Unfallverhütung von sich in der Nähe des Schleuderstreuers aufhaltenden Personen sichergestellt wird, ist außerhalb des Rotationsbereichs der äußeren Enden der Wurfschaufeln ein Schutzbügel angeordnet.

Insbesondere wenn die Wurfschaufeln sehr lang sind, entstehen erhöhte Sicherheitsprobleme, weil mit dem bloßen Auge aufgrund der hohen Drehzahl und geringen Objektgröße die Schaufeln dann nicht mehr wahrgenommen werden können.

Der Erfindung liegt die Aufgabe zu Grunde, die Enden der Wurfschaufeln besser sichtbar zu machen.

Diese Aufgabe wird erfindungsgemäß dadurch gelöst, dass im Bereich des Außenumfangs der Scheuderscheibe und/der im Bereich des äußeren Endes zumindest einer Wurfschaufel ein Lichtauslasselement und/oder ein Leuchtmittel, welches über zumindest über einen Teilrotationsbereich der Schleuderscheibe Licht als Warnmittel aussendet, angeordnet ist.

Infolge dieser Maßnahme sind die Enden der Schaufeln durch die leuchtenden Lichtauslasselemente und/oder ein Leuchtmittel sofort für jedermann, auch bei Dämmerung und Dunkelheit sichtbar. Hierdurch erhöht sich die Sicherheit der Maschine enorm. Die Sichtbarkeit der Schaufeln wird hierdurch sehr einfach erhöht.

Um in einfacher Weise elektrische Energie zum Leuchten der Leuchtmittel für die an den Schaufeln angeordneten Leuchtmittel zur Verfügung zu stellen, ist vorgesehen, dass die Leuchtmittel über ein oder mehrere Induktionsspulenfelder unter Ausnutzung der Rotation der Schleuderscheibe und/oder der Wurfschaufeln mit elektrischer Energie versorgt werden. Somit wird in einfacher Weise über Induktion auf die sich drehende Scheibe und den daran angeordneten Elementen übertragen.

In einer weiteren Ausgestaltung der Erfindung ist zur Übertragung der Energie an die Leuchtenmittel vorgesehen, dass die Leuchtmittel über ein oder mehrere Piezoelemente und/oder Anordnung von Spulen mit Magneten unter Ausnutzung der Vibration der Schleuderscheibe und/oder der Wurfschaufeln mit elektrischer Energie versorgt werden.

Auch ist es möglich, Energie an die Leuchtmittel dadurch zur Verfügung zu stellen, dass die Leuchtmittel über ein oder mehrere Piezoelemente unter Ausnutzung der wechselnden Belastung der Schleuderscheibe und/oder der Wurfschaufeln mit elektrischer Energie versorgt werden.

In einer weiteren Ausgestaltung ist vorgesehen, dass Induktionsspulenfelder Induktionsspulen und Dauermagnete aufweisen, dass die Dauermagneten dem Maschinenrahmen und die Induktionsspulen der Schleuderscheibe und/oder Wurfschaufel zugeordnet sind.

Eine einfache Ausgestaltung der Leuchtmittel lässt sich dadurch verwirklichen dass die Leuchtmittel als zumindest eine LED ausgebildet ist.

In einer anderen Ausgestaltung der Leuchtmittel ist vorgesehen, dass die Lichtauslasselemente von einem Lichtleiter, vorzugsweise Glasfaserkabel gespeist werden.

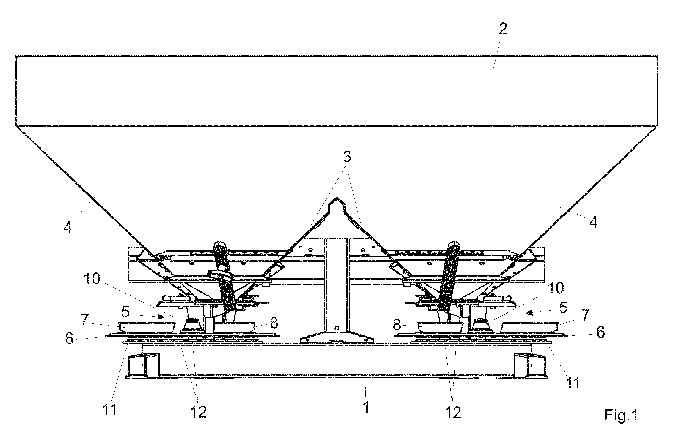

Weitere Einzelheiten der Erfindung sind der Beispielsbeschreibung zu entnehmen. Die Zeichnungen zeigen
- Fig.1: einen Schleuderdüngerstreuer in der Ansicht von hinten,

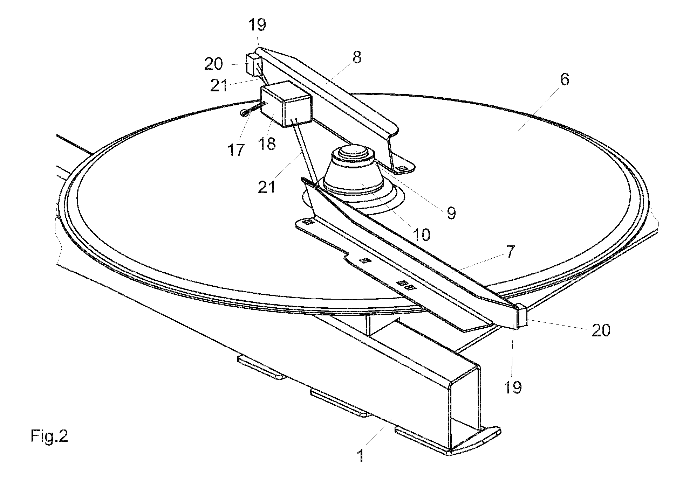

- Fig.2: den Fahrtrichtung gesehen unteren linken Bereich des Schleuderdüngerstreuers mit der erfindungsgemäß ausgestatteten Schleuderscheibe mit Wurfschaufeln in vergrößertem Maßstab und in perspektivischer Darstellung,

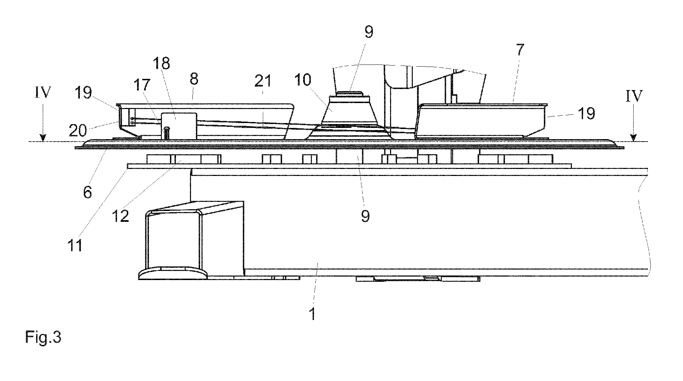

- Fig.3: die Schleuderscheibe mit Wurfschaufeln gemäß Fig.2 in der Ansicht von hinten,
- Fig.4: die Anordnung zur elektrischen Energieerzeugung für die Leuchtmittel an der Schleuderscheibe gemäß dem Schnitt IV - IV in perspektivischer Darstellung und
- Fig.5: die Anordnung zur elektrischen Energieerzeugung für die Leuchtmittel an der Schleuderscheibe gemäß dem Schnitt IV - IV.

Der Schleuderdüngerstreuer weist einen Rahmen 1 und einen Vorratsbehälter 2 auf. Auf der Vorderseite des Rahmens 1 sind in bekannter und daher nicht näher dargestellter Weise Dreipunktkupplungselemente zum Anbau an einen Schlepperkraftheber angeordnet. Der Vorratsbehälter 2 weist in seinem unteren Bereich die beiden durch das dachförmige Mittelteil 3 voneinander getrennten Auslauftrichter 4 auf. Die Auslauftrichter 4 sind jeweils durch ein Dosierorgan 5 abgeschlossen. Unterhalb der Dosierorgane 5 ist jeweils eine rotierend angetriebene Schleuderscheibe 6 angeordnet. Die Dosierorgane 5 leiten das sich im Vorratsbehälter 2 befindliche zu verteilende Material in einstellbaren Mengen den Schleuderscheiben 6 zu. Auf den Schleuderscheiben 6 sind Wurfschaufeln 7 und 8 angeordnet, welche das ihnen zugeleitete Material in Bereitverteilung auf der Bodenoberfläche verteilen.

Jede Schleuderscheibe 6 ist über eine an der Lagerwelle 9 befestigte Nabe 10 angeordnet. Die Lagerwelle 9 ist mittels einer nicht dargestellten Lageranordnung am Rahmen 1 drehbar gelagert und wird über einen bekannten und daher nicht dargestellten motorischen Antrieb rotierend angetrieben.

Auf dem Rahmen 1 und unterhalb der Schleuderscheibe 6 ist eine Zwischenplatte 11 befestigt, auf welcher die Dauermagnete 12 befestigt sind.

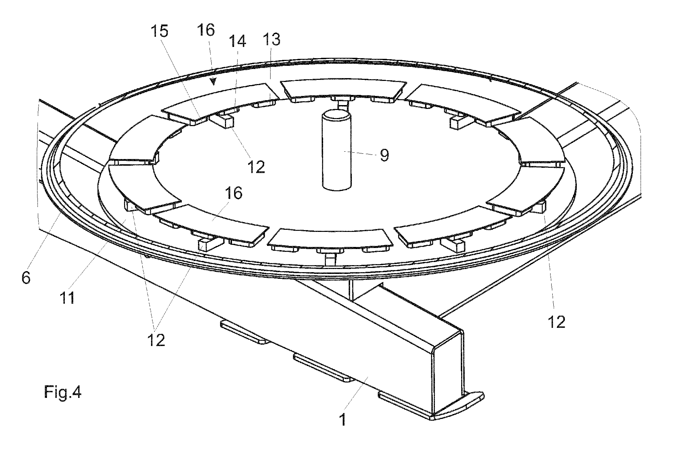

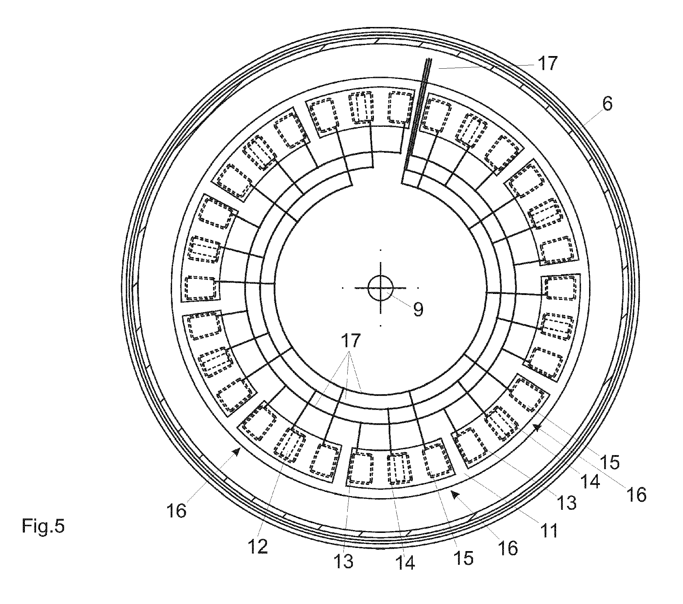

Unter der Schleuderscheibe 6 sind die miteinander verbundenen Spulen 13, 14, 15 in kreisförmiger Anordnung angeordnet und in geeigneter Weise befestigt, wie die Fig. 4 und 5 zeigen. Hierbei sind jeweils drei Spulen 13, 14, 15 zu einem Block 16 zusammengefasst, wie Fig.5 zeigt. Die Einzelspulen 13, 14, 15 sind über Leitungen 17 miteinander verwunden. Diese Leitungen 16 sind an eine elektrische Zwischenstation 18 angeschlossen.

Im Bereich des Außenumfangs der Schleuderscheibe 6 und im Bereich der äußeren Enden 19 der beiden Wurfschaufeln 7, 8 ist jeweils ein Lichtauslasselement und/oder ein Leuchtmittel 20, welches über zumindest über einen Teilrotationsbereich der Schleuderscheibe Licht als Warnmittel aussendet, angeordnet. Im Ausführungsbeispiel sind diese jeweils als LED 20 ausgebildet.

Über elektrische Übertragungsleitungen 21 sind die LEDs 20 mit der Zwischenstation 18 verbunden.

Durch die Rotation der jeweiligen Schleuderscheibe 6 mit den daran angeordneten Induktionsspulenfeldern 16 mit den Spulen 13, 14, 15 gegenüber den Dauermagneten 12 wird elektrische Energie in Form von elektrischem Strom erzeugt. Hierdurch werden die Leuchtmittel 20 mit elektrischer Energie versorgt. Dies geschieht, wie vorerwähnt über ein oder mehrere Induktionsspulenfelder 16 unter Ausnutzung der Rotation der Schleuderscheibe 6 und/oder der Wurfschaufeln 7, 8. Somit werden die LEDs 20 zum Leuchten gebracht.

Durch die LEDs 20 sind die Enden 19 der Wurfschaufeln 7, 8 auch bei schlechten Lichtverhältnissen gut sichtbar. Somit sind die Enden 19 der Schaufeln 7, 8 durch die leuchtenden Lichtauslasselemente und/oder Leuchtmittel 20 sofort für jedermann sichtbar hierdurch erhöhte sich die Sicherheit der Maschine enorm. Die Sichtbarkeit der Schaufeln 7, 8 wird hierdurch erhöht.

In nicht dargestellter Weise können die Leuchtmittel über ein oder mehrere Piezoelemente und/oder Anordnung von Spulen mit Magneten unter Ausnutzung der Vibration der Schleuderscheibe und/oder der Wurfschaufeln mit elektrischer Energie versorgt werden.

In einer anderen nicht dargestellten Weise können die Leuchtmittel über ein oder mehrere Piezoelemente unter Ausnutzung der wechselnden Belastung der Schleuderscheibe und/oder der Wurfschaufeln mit elektrischer Energie versorgt werden.

In einer weiteren nicht dargestellten Weise können Induktionsspulenfelder Induktionsspulen und Dauermagnete aufweisen und die Dauermagneten dem Maschinenrahmen und die Induktionsspulen der Schleuderscheibe und/oder Wurfschaufel zugeordnet sein.

In nicht dargestellter Weise können die Lichtauslasselemente von einem Lichtleiter, vorzugsweise Glasfaserkabel gespeist werden.

## Patentansprüche

1. Schleuderstreuer mit Vorratsbehälter, unter dem zumindest eine um eine aufrechte Achse mittels zumindest einer Antriebswelle rotierend antreibbare Schleuderscheibe angeordnet ist, wobei auf der Schleuderscheibe zumindest eine Wurfschaufel angeordnet ist, **dadurch gekennzeichnet, dass** im Bereich des Außenumfangs der Scheuderscheibe (6) und/der im Bereich des äußeren Endes (19) zumindest einer Wurfschaufel (7, 8) ein Lichtauslasselement und/oder ein Leuchtmittel (20), welches über zumindest über einen Teilrotationsbereich der Schleuderscheibe (6) Licht als Warnmittel aussendet, angeordnet ist.

2. Schleuderstreuer nach Anspruch1, **dadurch gekennzeichnet, dass** die Leuchtmittel (20) über ein oder mehrere Induktionsspulenfelder (12, 13, 14, 15, 16) unter Ausnutzung der Rotation der Schleuderscheibe (6) und/oder der Wurfschaufeln (7, 8) mit elektrischer Energie versorgt werden.

3. Schleuderstreuer nach Anspruch1, **dadurch gekennzeichnet, dass** die Leuchtmittel über ein oder mehrere Piezoelemente und/oder Anordnung von Spulen mit Magneten unter Ausnutzung der Vibration der Schleuderscheibe und/oder der Wurfschaufeln mit elektrischer Energie versorgt werden.

4. Schleuderstreuer nach Anspruch1, **dadurch gekennzeichnet, dass** die Leuchtmittel über ein oder mehrere Piezoelemente unter Ausnutzung der wechselnden Belastung der Schleuderscheibe und/oder der Wurfschaufeln mit elektrischer Energie versorgt werden.

5. Schleuderstreuer nach Anspruch1, **dadurch gekennzeichnet, dass** Induktionsspulenfelder Induktionsspulen und Dauermagnete aufweisen, dass die Dauermagneten dem Maschinenrahmen und die Induktionsspulen der Schleuderscheibe und/oder Wurfschaufel zugeordnet sind.

6. Schleuderstreuer nach Anspruch1, **dadurch gekennzeichnet, dass** die Leuchtmittel als zumindest eine LED (20) ausgebildet ist.

7. Schleuderstreuer nach Anspruch1, **dadurch gekennzeichnet, dass** die Lichtauslasselemente von einem Lichtleiter, vorzugsweise Glasfaserkabel gespeist werden.
